# EUROPÄISCHE PATENTSCHRIFT

(11) **EP 3 491 509 B1**
(45) Veröffentlichungstag und Bekanntmachung des Hinweises auf die Patenterteilung: **13.05.2020**
(21) Anmeldenummer: 17742187.2
(22) Anmeldetag: 06.07.2017
(51) Int. Cl.: G06F 3/0489, B60K 37/00, G06F 3/0481, B60K 37/02, G02B 27/01, G02B 27/64

(54) **VERFAHREN ZUM STEUERN EINER ANZEIGEVORRICHTUNG FÜR EIN KRAFTFAHRZEUG, ANZEIGEVORRICHTUNG FÜR EIN KRAFTFAHRZEUG UND KRAFTFAHRZEUG MIT EINER ANZEIGEVORRICHTUNG**
METHOD FOR CONTROLLING A DISPLAY APPARATUS FOR A MOTOR VEHICLE, DISPLAY APPARATUS FOR A MOTOR VEHICLE AND MOTOR VEHICLE HAVING A DISPLAY APPARATUS
PROCÉDÉ POUR COMMANDER UN DISPOSITIF D'AFFICHAGE POUR UN VÉHICULE À MOTEUR, DISPOSITIF D'AFFICHAGE POUR UN VÉHICULE À MOTEUR ET VÉHICULE À MOTEUR ÉQUIPÉ D'UN DISPOSITIF D'AFFICHAGE

(30) Priorität: 26.07.2016 DE 102016213687
(43) Veröffentlichungstag der Anmeldung: 05.06.2019
(73) Patentinhaber: Audi AG, 85045 Ingolstadt (DE)
(72) Erfinder: CRAMER, Stephanie, 85748 Garching (DE)
(86) Internationale Anmeldenummer: PCT/EP2017/067002
(87) Internationale Veröffentlichungsnummer: WO 2018/019544

(56) Entgegenhaltungen:
- WO-A1-2015/060193
- WO-A1-2015/159500
- DE-A1- 4 338 579
- DE-A1- 10 060 536
- DE-A1-102007 035 505
- DE-A1-102015 007 485
- US-A1- 2011 001 639
- US-A1- 2016 147 073

## Beschreibung

Die Erfindung betrifft ein Verfahren zum Steuern einer ein Head-up-Display umfassenden Anzeigevorrichtung für ein Kraftfahrzeug, gemäß dem Oberbegriff von Patentanspruch 1, eine derartige Anzeigevorrichtung für ein Kraftfahrzeug, gemäß dem Oberbegriff von Patentanspruch 10 und ein Kraftfahrzeug mit einer Anzeigevorrichtung, gemäß dem Oberbegriff von Patentanspruch 11.

Die DE 10 2009 041 205 A1 beschreibt ein Verfahren zur Regelung einer Anzeigevorrichtung in einem Fahrzeug, die als Head-up-Display ausgeführt ist, sowie eine entsprechende Vorrichtung zur Durchführung eines solchen Verfahrens. Bei dem Verfahren wird eine Fahrbahnoberfläche vor dem Fahrzeug mit einer Kamera erfasst, deren Signale hinsichtlich des Helligkeits- und/oder Farbniveaus der Fahrbahnoberfläche im Sichtfeld des Betrachters ausgewertet und zur Anpassung der Helligkeit für eine Optimierung des Kontrasts einer mittels des Head-up-Displays projizierten Darstellung herangezogen werden. Bei der Helligkeits- und/oder Farbregelung des Projektionssignals des Head-up-Displays können auch verschiedene Betrachtungswinkel und Blickfelder zwischen dem Betrachter und einer Windschutzscheibe des Fahrzeugs, auf die das Bild des Head-up-Displays projiziert wird, automatisch über den Fluchtpunkt der Kamera berücksichtigt werden. Ferner kann auch die Farbe des Head-up-Displays bei einem RGB-Imager als Kamera an den Hintergrund angepasst werden.

Aus der DE 198 16 647 A1 ist eine Vorrichtung zur Verbesserung des Kontrastes in einem Head-up-Display in einem Kraftfahrzeug bekannt. Dabei ist es vorgesehen, dass eine Windschutzscheibe des Kraftfahrzeugs vom Fahrzeugführer aus betrachtet in einem bestimmten Raumwinkel dunkel getönt ist und dass mittels des Head-up-Displays angezeigte Informationen für den Fahrzeugführer in diesem bestimmten Raumwinkel sichtbar sind. Dadurch soll die Erkennbarkeit der angezeigten Informationen verbessert werden. Der dunkel getönte Teil der Windschutzscheibe befindet sich dabei in deren unterem Bereich, wobei hier nur besonders wichtige Informationen angezeigt werden. Alle Informationen können zusätzlich auch in einem anderen, für den Fahrzeugführer in Geradeausrichtung sichtbaren Bereich der Windschutzscheibe angezeigt werden. Somit können die wichtigsten Informationen vom Fahrzeugführer mit einer minimalen Kopfbewegung abgelesen werden, auch wenn die in Geradeausrichtung angezeigten Informationen aufgrund eines fehlenden Kontrastes bei geänderter oder hoher Umgebungshelligkeit nicht oder nur schwer erkennbar sind.

Die DE 10 2015 007 485 A1 offenbart ein Verfahren und eine Vorrichtung zur Adaption von Bildinhalten eines Head-up-Displays auf einer Windschutzscheibe eines Fahrzeugs. Dabei wird als Wahrnehmungsbedingung der Bildinhalte eine Existenz einer Sonnenbrille vor den Augen eines Betrachters detektiert und beim Vorhandensein einer Sonnenbrille eine optimale Sichtbarkeit der Bildinhalte durch eine Änderung des Kontrastes und/oder einer Helligkeit und/oder einer Farbe der Bildinhalte eingestellt. Dabei können beispielsweise ein Bilderkennungsverfahren, eine auf Kantenerkennung basierende Merkmalsextraktion, eine Auswertung von Reflexionsmustern oder ein flächenbezogener Reflexionsgrad eines Hilfslichtstrahls zur Bestimmung der Sonnenbrille oder deren Existenz genutzt werden. Bei der Reflexion des von dem Head-up-Display ausgesandten Strahlenbündels an der Windschutzscheibe entsteht eine Teilpolarisation des Lichtes, weshalb durch das Verfahren und die Vorrichtung auch bei auftretenden Polarisationseffekten immer eine zuverlässige Sichtbarkeit des Bildinhaltes für den Fahrer gewährleistet werden soll.

Weiterhin sei in diesem Zusammenhang auf die WO 2015/159500 A1, die US 2016/147073 A1, die DE 100 60 536 A1, die DE 43 38 579 A1, die US 2011/001639 A1, die WO 2015/060193 A1 und die DE 10 2007 035505 A1 verwiesen.

Aufgabe der vorliegenden Erfindung ist es, ein Verfahren zum Steuern einer ein Head-up-Display umfassenden Anzeigevorrichtung für ein Kraftfahrzeug, eine solche Anzeigevorrichtung und ein Kraftfahrzeug mit einer solchen Anzeigevorrichtung bereitzustellen, welche eine besonders gute und sichere Wahrnehmbarkeit einer dargestellten Information ermöglichen.

Diese Aufgabe wird gelöst durch ein Verfahren mit den Merkmalen des Patentanspruchs 1, eine Anzeigevorrichtung mit den Merkmalen des Patentanspruchs 10 und ein Kraftfahrzeug mit den Merkmalen des Patentanspruchs 11. Vorteilhafte Ausgestaltungen und Weiterbildungen der Erfindung sind in den abhängigen Ansprüchen angegeben.

Bei dem Verfahren gemäß dem Oberbegriff von Anspruch 1 wird eine Anzeigevorrichtung für ein Kraftfahrzeug mit einem Head-up-Display mittels einer Steuereinrichtung gesteuert, wobei in Abhängigkeit von einem der Steuereinrichtung von einer Sensoreinrichtung bereitgestellten Signal eine Darstellung einer mittels des Head-up-Displays dargestellten Information verändert wird. Um eine besonders gute und sichere Wahrnehmbarkeit der dargestellten Information zu ermöglichen, ist es erfindungsgemäß vorgesehen, dass das Signal mit einer Farbe und/oder einer Helligkeit eines Projektionshintergrundes korreliert und/oder mit einer Relativbewegung zwischen dem Projektionshintergrund und einer Projektionsfläche korreliert. Als Veränderung der Darstellung der Information wird dann durch die Steuereinrichtung selbsttätig eine in Abhängigkeit von dem Signal bestimmte Höhenverstellung und/oder Drehung der Darstellung der Information vorgenommen. Mit anderen Worten wird die Darstellung der Information oder Informationen unter Berücksichtigung einer Umgebung des Kraftfahrzeugs und/oder einer Relation oder Beziehung zwischen dem Kraftfahrzeug und der Umgebung angepasst oder verändert. Die Anpassung erfolgt dabei insbesondere hinsichtlich einer Optimierung einer Erkennbarkeit oder der Wahrnehmbarkeit der dargestellten Information aus Sicht eines Fahrzeuginsassen oder durch den Fahrzeuginsassen. Die Anpassung oder Optimierung der Darstellung kann insbesondere bezüglich eines Fahrers oder Führers des Kraftfahrzeugs erfolgen, da dies besonders relevant und vorteilhaft beispielsweise für eine Sicherheit beim Führen des Kraftfahrzeugs ist.

Die DE 10 2015 007 485 A1 offenbart ein Verfahren gemäß dem Oberbegriff von Anspruch 1.

Gemäß dem kennzeichnenden Teil von Anspruch 1 ist es vorgesehen, dass das Signal erzeugt wird in Abhängigkeit von einer mittels der Sensoreinrichtung sensierten Farbe und/oder Helligkeit einer als Projektionshintergrund dienenden Fläche eines in einem vorbestimmten Abstandsbereich vor dem Kraftfahrzeug befindlichen Vorausfahrzeugs, in der die Information aus einer vorgegebenen Perspektive überlagert dargestellt wird. Weiterhin ist es dann vor- gesehen, dass mittels der Steuereinrichtung anhand der sensierten Farbe und/oder Helligkeit der Fläche sowie der jeweils aktuellen Darstellung der Information überprüft wird, ob ein vorgegebenes Wahrnehmbarkeitskriterium für die Darstellung erfüllt ist. Außerdem ist es dann auch vorgesehen, dass die Höhenverstellung der Darstellung, wenn das Wahrnehmbarkeitskriterium nicht erfüllt ist, derart vorgenommen wird, dass die Darstellung aus der vorgegebenen Perspektive einer anderen als der sensierten Fläche überlagert dargestellt wird.Der vorgegebene Abstandsbereich kann dabei abhängen von einer konkreten Ausführungsform oder Geometrie der Anzeigevorrichtung und des Kraftfahrzeugs. Der vorbestimmte Abstandsbereich kann beispielsweise den Bereich von 0 bis 20 Meter vor dem Kraftfahrzeug umfassen. Ebenso ist es denkbar, dass der Abstandsbereich beispielsweise je nach Fahrsituation oder in Abhängigkeit von einer aktuellen Einstellung bezüglich der Darstellung der Information dynamisch angepasst oder verändert wird. In jedem Fall kann eine kontinuierliche Überwachung des Abstandsbereiches - zumindest während eines Betriebes der Sensoreinrichtung und/oder der Anzeigevorrichtung - vorgesehen sein.

Der Projektionshintergrund kann hier eine beliebige Fläche oder ein beliebiger Bereich der Umgebung des Kraftfahrzeugs sein, der beziehungsweise dem die Darstellung der Information aus Sicht oder aus einer Perspektive des betrachtenden Fahrzeuginsassen überlagert erscheint. Die Projektionsfläche ist diejenige Fläche oder dasjenige Bauteil, an der beziehungsweise an dem das zur Darstellung der Information mittels des Head-up-Displays dienende Licht zumindest teilweise zu den Augen des jeweiligen betrachtenden Fahrzeuginsassen reflektiert oder gelenkt wird. Die Projektionsfläche kann also insbesondere eine Front- oder Windschutzscheibe des Kraftfahrzeugs oder ein Teilbereich von dieser sein. Die Höhenverstellung der Darstellung meint eine Steuerung des Head-up-Displays, durch welche die Darstellung der Information aus der Sicht oder Perspektive des betrachtenden Fahrzeuginsassen in Fahrzeughochrichtung nach oben oder nach unten verschoben dargestellt wird oder erscheint. Dies kann unabhängig von sonstigen Veränderungen oder Einstellungen erfolgen. Es kann auch vorgesehen sein, beispielsweise zum Ausgleich einer schrägen Anordnung oder eines gebogenen Verlaufes der Projektionsfläche eine weitere Anpassung, beispielsweise eine Größenanpassung, der Darstellung vorzunehmen, um eine von der Höhenverstellung abgesehen möglichst konsistente Darstellung zu erzielen. Die Drehung der Darstellung der Information meint eine Steuerung des Head-up-Displays, durch welche die Darstellung aus der Sicht oder Perspektive des jeweiligen betrachtenden Fahrzeuginsassen insbesondere um eine sich in Betrachtungsrichtung, bevorzugt in Fahrzeuglängsrichtung, erstreckende Achse rotiert dargestellt wird oder erscheint. Insbesondere kann ausschließlich eine Höhenverstellung, ausschließlich eine Drehung oder kombiniert sowohl eine Höhenverstellung als auch eine gleichzeitige Drehung der Darstellung vorgenommen oder eingestellt werden.

Insgesamt kann durch das erfindungsgemäße Verfahren eine Relativbewegung zwischen dem Projektionshintergrund und der Projektionsfläche vorteilhaft kompensiert oder ausgeglichen werden, sodass beispielsweise eine übermäßige oder unruhige Bewegung der Darstellung der Information gegenüber oder relativ, das heißt im Verhältnis zu dem Projektionshintergrund, das heißt der Fahrzeugumgebung, vermieden werden kann. Dadurch wird vorteilhaft die Wahrnehmbarkeit der Information verbessert und es können unerwünschte physiologische Effekte, beispielsweise Schwindel, Übelkeit. Kinetose oder dergleichen bei entsprechend empfindlichen Fahrzeuginsassen vermieden werden, wodurch die Sicherheit und/oder ein Komfort beim Führen des Fahrzeugs und/oder beim Nutzen des Head-up-Displays gesteigert werden können. Gleichzeitig kann dabei durch die Berücksichtigung der Farbe und/oder Helligkeit des Projektionshintergrundes, insbesondere eines Teilbereiches des Projektionshintergrundes, und eine entsprechend angepasste oder abgestimmte Höhenverstellung der Darstellung beispielsweise auf einen Kontrastverlust und somit eine eingeschränkte Erkennbarkeit der Information reagiert werden. Es wird also mit einem Minimum an von dem Fahrzeuginsassen wahrgenommener Bewegung der Darstellung ein Optimum an Erkennbarkeit und Wahrnehmbarkeit erreicht. Das Ruhighalten der Darstellung in Relation zu dem Projektionshintergrund ist dabei besonders vorteilhaft, da der Fahrer oder Fahrzeugführer beim Führen des Kraftfahrzeugs seine Aufmerksamkeit im Wesentlichen auf diesen Projektionshintergrund, das heißt die Fahrzeugumgebung, richtet und der Projektionshintergrund somit eine visuelle Referenz darstellt. Typische, bei einem bestimmungsgemäßen Betrieb des Kraftfahrzeugs, insbesondere eines Personenkraftwagens, auftretende Relativbewegungen können ohne eine Steuerung nach dem erfindungsgemäßen Verfahren zu wahrnehmbaren Relativbewegungen der Darstellung bezüglich des Projektionshintergrundes führen. Dabei werden die Relativbewegungen durch den Fahrzeuginsassen, etwa durch eine bewusste oder unbewusste ausgleichende Anpassung der Körperhaltung, dynamisch ausgeglichen. Somit wird durch das erfindungsgemäße Verfahren vorteilhaft erreicht, dass die Information aus der Sicht oder Perspektive, das heißt im Blickfeld oder Beobachtungsraum, des betrachtenden Fahrzeuginsassen dauerhaft in konstanter Position gehalten wird, sofern hier nicht aufgrund der Farbe und/oder der Helligkeit des Projektionshintergrundes die Erkennbarkeit eingeschränkt ist. Dadurch kann besonders effektiv ein von Seiten des Fahrzeuginsassen notwendiger Aufwand zur Wahrnehmung oder Erfassung der dargestellten Information minimiert werden, da beispielsweise keine zusätzliche Kopfbewegung oder Anpassung eines Blickwinkels oder ein bewusstes oder unbewusstes Suchen der Information notwendig ist. Durch diese Aufwandsminimierung kann der Fahrer einen größeren Anteil seines Aufmerksamkeits- oder Informationserfassungspotentials auf das Führen des Fahrzeugs und auf die Fahrzeugumgebung richten, wodurch ebenfalls die Sicherheit erhöht wird.

In weiterer Ausgestaltung der Erfindung ist es vorgesehen, dass für die Bestimmung der Höhenverstellung und/oder der Drehung der Darstellung der Information ein vorgegebenes, durch die Höhenverstellung und/oder die Drehung zu erfüllendes Wahrnehmbarkeitskriterium berücksichtigt und/oder ausgewertet wird. Die Bestimmung der Höhenverstellung und/oder der Drehung bedeutet dabei eine Bestimmung oder Festlegung eines Maßes, Ausmaßes oder Umfangs der entsprechenden Veränderung. Die Berücksichtigung und/oder die Auswertung können dabei jeweils vor, während und/oder nach der Verstellung durchgeführt werden. Es kann hier auch ein iterativer Prozess oder ein Regelungsprozess für die Höhenverstellung und/oder für die Drehung vorgesehen sein, wobei das Wahrnehmbarkeitskriterium ein zu überschreitender oder zu unterschreitender Grenz- oder Schwellwert oder ein Regelziel sein oder repräsentieren kann. Vorteilhaft kann durch die Vorgabe des Wahrnehmbarkeitskriteriums eine objektiv optimale Anpassung an verschiedene Situationen erfolgen. Mögliche Wahrnehmbarkeitskriterien können beispielsweise bestimmte Grenz- oder Minimalwerte für einen Kontrast, eine Helligkeit oder auch einen Abstand auf einer Farbskala oder in einem Farbraum zwischen der Darstellung der Information und dem Projektionshintergrund sein. Ebenso ist es denkbar, als Wahrnehmbarkeitskriterium eine bestimmte Position und/oder Lage der Darstellung der Information festzulegen. So kann es dann beispielsweise vorgesehen sein, dass die Darstellung immer innerhalb eines bestimmten Bereiches angezeigt werden oder aus der Perspektive des betrachtenden Fahrzeuginsassen wahrnehmbar sein soll, wobei ein derartiger Bereich auch dynamisch veränderbar, flexibel oder variabel sein kann. Ein Beispiel für einen solchen Bereich kann ein jeweiliges Blickfeld des Fahrzeuginsassen sein. Ein Beispiel für eine bestimmte Lage der Darstellung als Wahrnehmbarkeitskriterium kann etwa eine dauerhaft waagerechte Darstellung oder Lage der Darstellung beispielsweise bezüglich eines Schwerkraftvektors und/oder eines Fahrzeuguntergrundes oder des Projektionshintergrundes sein. Es ist besonders vorteilhaft, wenn die Darstellung durch eine konstante Lage zuverlässig und konsistent für den Fahrzeuginsassen auffindbar und ablesbar ist und die Darstellung sich nicht so weit bewegt, dass sie am Rande oder außerhalb eines Sichtfeldes des betrachtenden Fahrzeuginsassen gerät und dann beispielsweise nur noch im peripheren Sichtfeld liegen oder erkennbar sein würde.

In weiterer Ausgestaltung der Erfindung ist es vorgesehen, dass das Signal in Abhängigkeit von einer mittels der Sensoreinrichtung sensierten Größe und Veränderungsrichtung eines Nick- und/oder Wankwinkels des Kraftfahrzeugs erzeugt wird und die Darstellung der Information in Kompensierung des sensierten Nick- und/oder Wankwinkels höhenverstellt und/oder gedreht dargestellt wird. Der Nickwinkel beschreibt dabei ein Drehen oder Kippen des Kraftfahrzeugs um eine sich in Fahrzeugquerrichtung erstreckende Achse. Diese Achse kann beispielsweise durch einen Mittel- oder Schwerpunkt des Kraftfahrzeugs - zumindest bezogen auf die Fahrzeuglängsrichtung - verlaufen. Der Wankwinkel beschreibt hingegen ein Drehen oder Kippen des Kraftfahrzeugs um eine sich in Fahrzeuglängsrichtung erstreckende Achse. Auch diese Achse kann beispielsweise durch einen Mittel- oder Schwerpunkt des Kraftfahrzeugs - zumindest bezüglich der Fahrzeugquerrichtung - verlaufen. Je nach Fahr-, Bewegungs-, Untergrund- und/oder Umgebungssituation kann die Höhenverstellung und/oder Drehung der Darstellung der Information in oder entgegen der Veränderungsrichtung des Nick- und/oder Wankwinkels des Kraftfahrzeugs erfolgen oder vorgenommen werden.

Bevorzugt werden die Stellrichtung und das Maß oder der Umfang der Verstellung so an die jeweilige Situation angepasst, dass sich eine optimale Erkennbarkeit und Wahrnehmbarkeit der dargestellten Information für den Fahrzeuginsassen, das heißt aus der Sicht oder der Perspektive des Fahrzeuginsassen, ergeben. Hier kann es beispielsweise vorgesehen sein, dass die Position und/oder Lage der Darstellung relativ zum Projektionshintergrund und/oder zum Blickfeld des Fahrzeuginsassen gleich oder konstant gehalten wird. Hierdurch kann besonders vorteilhaft eine möglichst ruhige und konsistente und damit besonders schnell, einfach und zuverlässig aufnehmbare Informationsdarstellung realisiert werden. Sowohl die Größe als auch die Veränderungsrichtung des Nick- und/oder Wankwinkels des Kraftfahrzeugs können beispielsweise durch entsprechende Beschleunigungs- oder Winkelsensoren, Gyroskope oder dergleichen sensiert oder detektiert werden.

In weiterer Ausgestaltung der Erfindung ist es vorgesehen, dass durch ein aktives Fahrwerk des Kraftahrzeugs ein Nick- und/oder Wankwinkel aktiv eingestellt wird, dass das der Steuereinrichtung bereitgestellte Signal diesen aktiv eingestellten Nick- und/oder Wankwinkel entspricht und die Darstellung der Information entgegengesetzt zu einer Stellrichtung des Nick- und/oder Wankwinkels höhenverstellt und/oder gedreht dargestellt wird. Mit anderen Worten kann also die Darstellung der Information so verstellt werden, dass genau eine durch das aktive Fahrwerk vorgenommene Verstellmaßnahme ausgeglichen wird. Aus einer von der Nick- und/oder Wankbewegung des Kraftfahrzeugs unabhängigen Perspektive erscheint somit die Darstellung der Information ebenfalls von dieser Bewegung unbeeinflusst konstant. Neben der auch hier vorteilhaft realisierten, besonders guten Erkenn- und Wahrnehmbarkeit der Information wird zudem die Steuerung besonders schnell und präzise in optimaler zeitlicher Synchronisation mit der aktiv eingestellten Fahrzeugbewegung ermöglicht. Somit kann beispielsweise ein aufwendiger Regelmechanismus oder eine separate Sensorik entfallen. Besonders vorteilhaft kann eine in der Größe oder dem Verstellumfang und in der Verstellrichtung die Stellvorgänge des aktiven Fahrwerks exakt ausgleichende Erstellung oder Steuerung der Darstellung der Information dann eingesetzt werden, wenn durch das aktive Fahrwerk bei ebenem oder gleichförmigem Untergrund und/oder Projektionshintergrund Fahrwerksverstellungen zur Unterstützung einer Fahrdynamik oder eines Fahrdynamikeindrucks vorgenommen werden.

Als vorgegebene Perspektive kann beispielsweise eine typische Perspektive des Fahrers des Kraftfahrzeugs vorbestimmt oder definiert sein. Ebenso ist es jedoch denkbar, dass als vorgegebene Perspektive jeweils eine tatsächliche momentane Perspektive des Fahrers - oder allgemein eines Fahrzeuginsassen - verwendet wird, die beispielsweise mittels einer an sich bekannten Fahrerzustandsüberwachungseinrichtung oder dergleichen bestimmbar ist. Auch hier können mögliche Wahrnehmbarkeitskriterien beispielsweise bestimmte Grenz- oder Minimalwerte für einen Kontrast, eine Helligkeit oder auch einen Abstand auf einer Farbskala oder in einem Farbraum zwischen der Darstellung der Information und dem Projektionshintergrund sein. Ebenso ist es auch hier denkbar, als Wahrnehmbarkeitskriterium eine bestimmte Position und/oder Lage der Darstellung der Information festzulegen.

Als sensierte Fläche ist hier diejenige Fläche bezeichnet, deren Farbe und/oder Helligkeit mittels der Sensoreinrichtung sensiert wurde und welche vor einer eventuell vorgenommenen oder vorzunehmenden Höhenverstellung der Darstellung als Projektionshintergrund dient oder diente. Die andere Fläche, die nach der jeweiligen Höhenverstellung als Projektionshintergrund dient, kann eine Fläche des Vorausfahrzeuges, aber auch eine sonstige Fläche der Fahrzeugumgebung sein. Die Sensoreinrichtung kann hier beispielsweise eine Fahrerassistenzkamera des Kraftfahrzeugs umfassen, welche gegebenenfalls auch für andere Funktionalitäten oder Systeme des Kraftfahrzeugs verwendet wird, wodurch vorteilhaft zusätzlicher Bauteilaufwand vermieden werden kann. Durch die dynamische, umgebungs- oder situationsabhängige Höhenverstellung der Darstellung kann vorteilhaft sichergestellt werden, dass eine Höhenverstellung nur dann vorgenommen wird, wenn dies notwendig ist, um die Erkennbarkeit oder die Wahrnehmbarkeit der dargestellten Information zu verbessern oder zu garantieren. Es ist auch denkbar, dass hier - ebenso wie in den anderen Ausführungsformen der Erfindung - statt aller dargestellten Informationen nur eine Teilmenge höhenverstellt beziehungsweise gedreht dargestellt wird. Dies kann hier beispielsweise dann vorgesehen sein, wenn verschiedene Teilinformationen mit unterschiedlichen Farben und/oder Helligkeiten dargestellt werden. Alternativ oder zusätzlich kann es auch vorgesehen sein, dass die Farbe und/oder die Helligkeit der Darstellung der Information in Abhängigkeit von den Eigenschaften der sensierten Fläche oder in Abhängigkeit von dem Erfülltsein des Wahrnehmbarkeitskriteriums angepasst oder verändert wird.

Bevorzugt kann es vorgesehen sein, dass eine Farbsättigung, ein Hellwert oder eine Dunkelstufe oder eine relative oder absolute Helligkeit oder eine Lichtintensität verändert werden, während ein Farbwert oder Farbton konstant gehalten wird. Dadurch kann vorteilhaft eine auf dem Farbton oder Farbwert basierende Zuordnung verschiedener Teilinformationen zu verschiedenen Funktionalitäten aufrechterhalten werden. Um eine aufwendige kontinuierliche Farbsteuerung vermeiden zu können, können beispielsweise zwei unterschiedliche Einstellungen vorgesehen sein. Diese Einstellungen können beispielsweise ein Modus oder Schema für eine Nutzung bei hellem Projektionshintergrund und ein weiterer Modus oder ein weiteres Schema für eine Nutzung bei dunklem Projektionshintergrund sein und jeweils optimal aufeinander abgestimmte Einstellungen für die jeweils verwendeten Farben, Helligkeiten und dergleichen umfassen. Konkret kann es beispielsweise vorgesehen sein, dass erkannt wird, dass aus der Perspektive des Fahrers des Kraftfahrzeugs die Darstellung der Information einen weiß lackierten Kofferraumdeckel des Vorausfahrzeugs überlagert dargestellt wird und daraufhin die Darstellung in Fahrzeughochrichtung nach oben verschoben oder höhenverstellt wird, sodass dann der weiße Kofferraumdeckel des Vorausfahrzeugs nicht mehr den Projektionshintergrund bildet.

In weiterer Ausgestaltung der Erfindung ist es vorgesehen, dass mittels einer Abtasteinrichtung, insbesondere eines Laserscanners, des Kraftfahrzeugs eine Kontur des Vorausfahrzeugs ermittelt und die Höhenverstellung der Darstellung der Information in Abhängigkeit von der ermittelten Kontur gesteuert wird. Mit anderen Worten können verschiedene Bauteile, Umrisse oder Flächen des Vorausfahrzeugs erfasst werden und die Höhenverstellung der Darstellung der Information kann so gesteuert werden, dass eine beispielsweise hinsichtlich eines Wahrnehmbarkeitskriteriums besonders als Projektionshintergrund geeignete Fläche aus der Perspektive des Fahrers tatsächlich als Projektionshintergrund erscheint. Beispielsweise kann hierfür eine Heckscheibe des Vorausfahrzeugs erfasst und als Projektionshintergrund genutzt werden, wodurch sich mit oder ohne Anpassung einer Farbe und/oder Helligkeit der Darstellung eine verbesserte Erkennbarkeit, beispielsweise ein höherer Kontrast, ergibt.

In weiterer Ausgestaltung der Erfindung ist es vorgesehen, dass eine Augenposition und/oder ein Blickfeld eines Fahrzeuginsassen, insbesondere eines Fahrers, des Kraftfahrzeugs mittels einer Überwachungseinrichtung, insbesondere mittels einer Kamera, bestimmt und die Höhenverstellung der Darstellung der Information in Abhängigkeit von der Augenposition und/oder dem Blickfeld gesteuert wird. Die Kamera kann beispielsweise eine Fahrerzustandsüberwachungskamera und beispielsweise in einer Instrumententafel oder in einem Kombiinstrument des Kraftfahrzeugs angeordnet sein. Durch eine derartige Überwachungseinrichtung und entsprechende Steuerung kann vorteilhaft die Geometrie der Situation, das heißt die tatsächliche Perspektive des Fahrzeuginsassen bezüglich der Darstellung der Information, berücksichtigt werden, sodass eine individuell angepasste optimierte Darstellung realisiert werden kann.

In weiterer Ausgestaltung der Erfindung ist es vorgesehen, dass durch die Steuerung der Drehung der Darstellung der Information diese immer waagerecht dargestellt wird. Mit anderen Worten kann die Information - zumindest während eines Betriebes der Anzeigevorrichtung - waagerecht bezüglich des jeweiligen Schwerkraftvektors und/oder des jeweiligen Untergrundes, auf dem das Kraftfahrzeug sich bewegt oder der sich in einem Blick- oder Sichtfeld des Fahrzeuginsassen vor dem Kraftfahrzeug befindet, dargestellt werden. Dadurch wird vorteilhaft eine besonders gute, da einfache und schnelle sowie konsistente Wahrnehmbarkeit und Auffindbarkeit der dargestellten Information gewährleistet, unabhängig von der jeweiligen Fahrsituation.

Unabhängig von sonstigen Ausgestaltungen kann es auch vorgesehen sein, dass der Steuereinrichtung Daten eines Navigationssystems des Kraftfahrzeugs bereitgestellt werden oder Positions- oder Navigationsdaten von der Steuereinrichtung ausgewertet werden und für die Steuerung der Anzeigevorrichtung berücksichtigt werden. So kann beispielsweise ermittelt werden, wenn sich das Kraftfahrzeug auf einer Steigung oder einer Gefällestrecke bewegt, und ein Grad der Steigung oder des Gefälles kann dann in die Steuerung der Höhenverstellung der Darstellung der Information einfließen.

Eine erfindungsgemäße Anzeigevorrichtung für ein Kraftfahrzeug umfasst ein Head-up-Display, eine Sensoreinrichtung und eine Steuereinrichtung, mittels welcher eine mittels des Head-up-Displays erzeugte Darstellung einer Information in Abhängigkeit von einem der Steuereinrichtung von der Sensoreinrichtung bereitgestellten Signal veränderbar ist. Um eine besonders gute und sichere Wahrnehmbarkeit der dargestellten Information zu garantieren, ist es dabei vorgesehen, dass die Anzeigevorrichtung dazu eingerichtet ist, zumindest eine Variante des erfindungsgemäßen Verfahrens durchzuführen und dazu eine Prozessoreinrichtung und eine Speichereinrichtung mit einem die Verfahrensschritte codierenden und mittels der Prozessoreinrichtung ausführbaren Programmcode aufweist. Eine derartige Anzeigevorrichtung ist auch Teil eines erfindungsgemäßen Kraftfahrzeugs.

Die bisher und im Folgenden sowie in den Patentansprüchen beschriebenen funktionalen Ausbildungen der Erfindung sowie die entsprechenden Vorteile sind entsprechend sinngemäß wechselseitig zwischen dem erfindungsgemäßen Verfahren, der erfindungsgemäßen Anzeigevorrichtung und dem erfindungsgemäßen Kraftfahrzeug sowie den zur Ausführung oder Durchführung des erfindungsgemäßen Verfahrens verwendeten Einrichtungen und Bauteilen übertragbar.

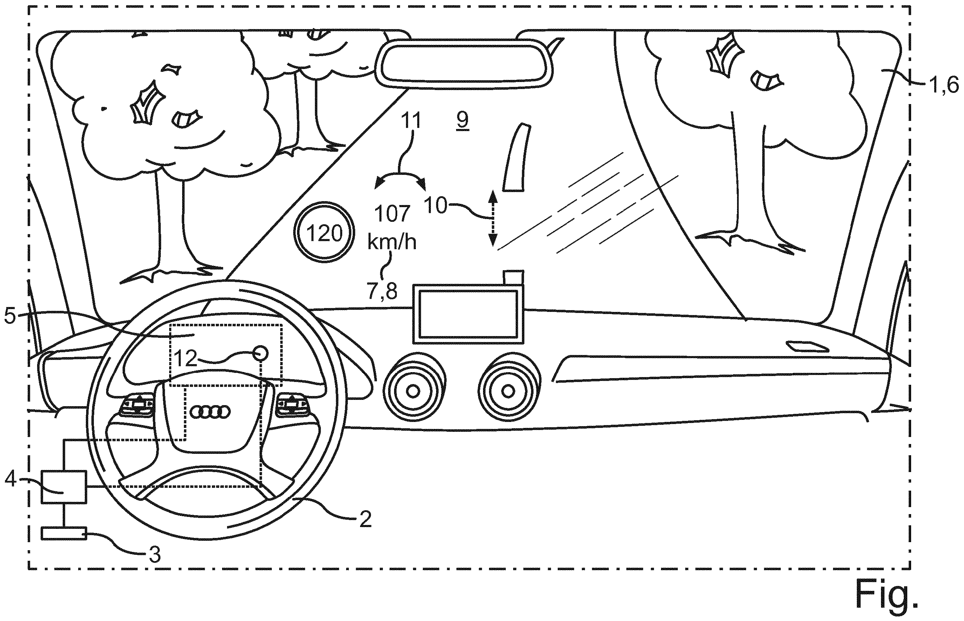

Weitere Vorteile, Merkmale und Einzelheiten der Erfindung ergeben sich aus der nachfolgenden Beschreibung eines bevorzugten Ausführungsbeispiels sowie anhand der Zeichnung. Dabei zeigt die einzige Figur eine schematische Perspektivdarstellung eines Ausschnittes eines Sichtfeldes eines Fahrers eines Kraftfahrzeugs in Richtung einer Frontscheibe des Kraftfahrzeugs.

Die einzige Figur zeigt in einer schematischen Perspektivdarstellung einen Ausschnitt aus einem Sicht- oder Blickfeld eines Fahrers eines Kraftfahrzeugs in Richtung einer Frontscheibe 1 des Kraftfahrzeugs. Zwischen dem hier nicht dargestellten Fahrer und der Frontscheibe 1 ist zur Einordnung der Perspektive ein Lenkrad 2 des Kraftfahrzeugs dargestellt. Vorliegend weist das Kraftfahrzeug eine Sensoreinrichtung 3, eine Steuereinrichtung 4 und ein Head-up-Display 5 auf. Die Sensoreinrichtung 3, die Steuereinrichtung 4 und das Head-up-Display 5 sind mittels entsprechender Datenleitungen oder Datenverbindungen miteinander direkt oder indirekt verbunden und können beispielsweise an einen CAN-Bus des Kraftfahrzeugs angeschlossen sein.

Die Darstellung ist hier rein schematisch zu verstehen, und die einzelnen Einrichtungen und Bauteile können bei einer realen Ausführung eine Vielzahl von Einzelteilen, Baugruppen, Untersystemen und dergleichen umfassen, welche auch jeweils räumlich voneinander beabstandet verteilt in oder an dem Kraftfahrzeug angeordnet sein können.

Vorliegend umfasst die Sensoreinrichtung 3 zumindest einen Sensor zur Sensierung oder Detektion eines Nick- und eines Wankwinkels des Kraftfahrzeugs sowie eine in einem Frontbereich des Kraftfahrzeugs angeordnete Fahrerassistenzkamera, mittels welcher eine Umgebung des Kraftfahrzeugs, insbesondere ein Bereich vor dem Kraftfahrzeug, erfasst werden kann. Das Head-up-Display 5 ist vorliegend so eingerichtet und angeordnet, dass es die Windschutzscheibe oder Frontscheibe 1 oder einen Teilbereich der Frontscheibe 1 als Projektionsfläche 6 nutzt. Mittels des Head-up-Displays 5 kann dem Fahrer des Kraftfahrzeugs somit eine Darstellung 7 einer Information 8 angezeigt oder dargestellt werden, wenn dieser seinen Blick durch die Frontscheibe 1 auf die vor dem Kraftfahrzeug befindliche Umgebung richtet. Dabei erscheint oder dient dieser vor dem Kraftfahrzeug liegende Umgebungsbereich als Projektionshintergrund 9, dem die Darstellung 7 aus einer Sicht oder Perspektive des Fahrers überlagert erscheint. Hier nicht näher dargestellt umfasst das Kraftfahrzeug vorliegend weiterhin ein aktives Fahrwerk, mittels welchem der Nick- und Wankwinkel des Kraftfahrzeugs aktiv eingestellt oder verändert werden können. Hier können beispielsweise Nickwinkel oder Nickbewegungen von bis zu 3 Grad und Wankbewegungen oder Wankwinkel von bis zu 5 Grad eingestellt oder ausgeglichen werden.

Bei heutzutage aus dem Stand der Technik bekannten Head-up-Displays in Fahrzeugen sind die Position und die Winkellage der Informationsdarstellung fest fixiert relativ zu der jeweils verwendeten Projektionsfläche. Für den Fahrer, für den der Projektionshintergrund 9, das heißt die Umgebung des Fahrzeugs, als visuelle Referenz dient und der kleinere Bewegungen des Fahrzeugs durch entsprechend gegensätzliche Körperbewegungen ausgleicht, ergibt sich damit nachteilig eine sich vor dem Projektionshintergrund 9 unruhig bewegende und in ihrer Winkellage inkonsistente Informationsdarstellung.

Um diesen Problemen zu begegnen, ist es vorliegend vorgesehen, dass von der Sensoreinrichtung 3 der Steuereinrichtung 4 ein Signal bereitgestellt wird und die Steuereinrichtung 4 in Abhängigkeit von diesem Signal das Head-up-Display 5 derart ansteuert, dass die Darstellung 7 höhenverstellt und/oder gedreht dargestellt wird. Das Signal kann dabei beispielsweise ein elektrisches Signal sein, das einem Betrag und/oder einer Veränderung einer von der Sensoreinrichtung 3 sensierten Messgröße entspricht. Durch die Steuereinrichtung 4 kann das Signal unmittelbar verwertet und in entsprechende Steuersignale für das Head-up-Display 5 umgesetzt werden oder es kann zunächst eine Datenverarbeitung oder Auswertung des Signals erfolgen.

Hier ist prinzipiell auch eine Kombination mit weiteren Signalen, Messgrößen oder dergleichen denkbar, die dann sämtlich in die Generierung der Steuersignale für das Head-up-Display 5 einfließen können. Vorliegend ist es vorgesehen, dass das Signal mit einer Farbe und/oder einer Helligkeit des Projektionshintergrundes 9 korreliert und/oder mit einer Relativbewegung zwischen dem Projektionshintergrund 9 und der Projektionsfläche 6 korreliert. Das bedeutet, dass ein spezifisches Signal oder ein Signal mit spezifischen Eigenschaften generiert wird für jeweils unterschiedlichen sensierte Farben, Helligkeiten und Relativbewegungen. Die Korrelation ist dabei selbstverständlich einseitig zu verstehen, da eine Veränderung der Farbe, der Helligkeit, der Position oder der Winkellage der Darstellung 7 selbstverständlich keinerlei Einfluss auf die entsprechenden sensierten Messgrößen hat.

Beispielsweise kann es vorgesehen sein, dass mittels des aktiven Fahrwerks bei einem Beschleunigungsvorgang des Kraftfahrzeugs ein negativer Nickwinkel eingestellt wird. Das bedeutet, dass ein Frontbereich des Kraftfahrzeugs relativ zu einem Heckbereich angehoben und/oder der Heckbereich relativ zu dem Frontbereich abgesenkt wird. Weiterhin kann es beispielsweise vorgesehen sein, dass beim Durchfahren einer Kurve ein Wankwinkel durch das aktive Fahrwerk eingestellt wird. Durch diese Maßnahmen kann beispielsweise ein bestimmter bevorzugter Fahrdynamikeindruck an die Fahrzeuginsassen vermittelt werden. Dies kann insbesondere auch bei ebenem Untergrund, das heißt bei einer ebenen Fahrbahn, erfolgen. Insbesondere in diesem Fall ist es vorliegend vorgesehen, dass simultan zu den Stellvorgängen des aktiven Fahrwerks entsprechende Steuersignale an die Steuereinrichtung 4 oder das Head-up-Display 5 gesendet werden und die Darstellung 7 so verstellt wird, dass die durch das aktive Fahrwerk bewirkten Relativbewegungen zwischen der Projektionsfläche 6 und dem Projektionshintergrund 9 gerade ausgeglichen oder kompensiert werden. Mit anderen Worten wird bei einem negativen Nickwinkel des Kraftfahrzeugs die Darstellung 7 in Fahrzeughochrichtung nach unten und bei einem positiven Nickwinkel in Fahrzeughochrichtung nach oben verstellt, was durch einen Doppelpfeil 10 angedeutet ist. In entsprechender Weise wird ein Wankwinkel des Kraftfahrzeugs ausgeglichen, indem das Head-up-Display 5 derart angesteuert wird, dass die Darstellung 7 um einen dem jeweiligen Wankwinkel entsprechenden Winkel oder Betrag entgegen der Veränderungs- oder Stellrichtung des Wankwinkels gedreht wird. Diese Drehung oder Rotation der Darstellung 7 ist hier durch einen Doppelpfeil 11 angedeutet.

Zusätzlich zu der Kompensierung des Nick- und/oder Wankwinkels des Kraftfahrzeugs ist es vorliegend vorgesehen, dass mittels der Fahrerassistenzkamera ein vorgegebener Bereich von beispielsweise 0 bis 20 Meter vor dem Kraftfahrzeug daraufhin überwacht wird, ob die Darstellung 7 aus der Perspektive des Fahrers einer Fläche mit bestimmten Farb- und/oder Helligkeitseigenschaften überlagert erscheint. Es kann vorgesehen sein, dass bestimmte Farb- und/oder Helligkeitseigenschaften vorgegeben sind, bei deren Sensierung die Darstellung 7 höhenverstellt wird. Es kann jedoch auch vorgesehen sein, dass dynamisch beispielsweise unter Berücksichtigung der Farbe und/oder der Helligkeit der jeweils aktuellen Darstellung 7 und/oder einer Umgebungshelligkeit ein Wahrnehmbarkeitskriterium für die jeweils aktuelle Darstellung 7 ausgewertet wird. Ist beispielsweise als Wahrnehmbarkeitskriterium ein minimales Kontrastverhältnis oder eine minimale Farbwertdifferenz zwischen der Farbe der sensierten Fläche, die jeweils aktuell den Projektionshintergrund 9 bildet, und der Farbe der Darstellung 7 definiert, so wird bei einem Unterschreiten der jeweiligen Minimalwerte die Darstellung 7 höhenverstellt, das heißt an anderer Stelle dargestellt, sodass ein dann den neuen Projektionshintergrund 9 bildender Bereich eine verbesserte Erkennbarkeit der Darstellung 7, beispielsweise in Form eines höheren Kontrastverhältnisses und/oder eines größeren Farbwertabstandes, gewährleistet.

Bevorzugt umfasst die Sensoreinrichtung 3 dabei einen Laserscanner, mittels welchem eine Kontur eines in dem vorbestimmten Abstandsbereich befindlichen Vorausfahrzeuges erfasst wird. Mittels des Laserscanners kann dann beispielsweise eine jeweilige Kontur einer Heckscheibe des Vorausfahrzeugs ermittelt werden. Daraufhin wird dann die Darstellung 7 derart höhenverstellt, dass die Heckscheibe als Projektionshintergrund erscheint. Für eine besonders genaue Ermittlung, welche Fläche oder welcher Flächen- oder Teilbereich der Umgebung des Kraftfahrzeugs tatsächlich aus der Perspektive des Fahrers den jeweiligen Projektionshintergrund 9 bildet, ist vorliegend das Kraftfahrzeug mit einer Fahrerzustandsüberwachungskamera 12 ausgestattet. Die Fahrerzustandsüberwachungskamera 12 ist dabei in einem Kombiinstrument des Kraftfahrzeugs angeordnet, wodurch vorteilhaft ein Gesicht und somit insbesondere eine Position der Augen des Fahrers und eine entsprechende Blickrichtung oder ein entsprechendes Blick- oder Sichtfeld des Fahrers erfasst oder ermittelt werden können. Aus diesen mittels der Fahrerzustandsüberwachungskamera 12 erfassten Daten kann also die tatsächliche Perspektive des Fahrers ermittelt und für die Steuerung der Position und Winkellage der Darstellung 7 herangezogen werden.

Prinzipiell ist es auch denkbar, dass anstelle der Frontscheibe 1 ein anderes Bauteil als Projektionsfläche 6 dienen kann. Beispielsweise könnte zwischen dem Lenkrad 2 und der Frontscheibe 1 eine Projektionsscheibe angeordnet sein, welche beispielsweise Bestandteil eines nachrüstbaren Head-up-Displays 5 sein kann. Je nach tatsächlicher konkreter Ausführungsform des Head-up-Displays 5 und der verwendeten Projektionsfläche 6 können die Höhenverstellung und die Drehung der Darstellung 7 auf unterschiedliche Weise realisiert sein. Beispielsweise kann ein Spiegel im Strahlengang des Head-up-Displays 5 steuerbar beweglich gelagert sein, und/oder die nachgerüstete Projektionsscheibe kann neig- oder kippbar gelagert sein.

## Patentansprüche

1. Verfahren zum Steuern einer ein Head-up-Display (5) umfassenden Anzeigevorrichtung für ein Kraftfahrzeug mittels einer Steuereinrichtung (4), bei dem in Abhängigkeit von einem der Steuereinrichtung (4) von einer Sensoreinrichtung (3) bereitgestellten Signal eine Darstellung (7) einer mittels des Head-up-Displays (5) dargestellten Information (8) verändert wird, wobei
- das Signal mit einer Farbe und/oder einer Helligkeit eines Projektionshintergrundes (9) korreliert und/oder mit einer Relativbewegung zwischen dem Projektionshintergrund (9) und einer Projektionsfläche (6) korreliert, und
- als Veränderung durch die Steuereinrichtung (4) selbsttätig eine in Abhängigkeit von dem Signal bestimmte Höhenverstellung und/oder Drehung der Darstellung (7) der Information (8) vorgenommen wird, **dadurch gekennzeichnet, dass**
- das Signal erzeugt wird in Abhängigkeit von einer mittels der Sensoreinrichtung (3) sensierten Farbe und/oder Helligkeit einer als Projektionshintergrund (9) dienenden Fläche eines in einem vorbestimmten Abstandsbereich vor dem Kraftfahrzeug befindlichen Vorausfahrzeugs, der die Information (8) aus einer vorgegebenen Perspektive überlagert dargestellt wird,
- mittels der Steuereinrichtung (4) anhand der sensierten Farbe und/oder Helligkeit der Fläche sowie der jeweils aktuellen Darstellung (7) der Information überprüft (8) wird, ob ein vorgegebenes Wahrnehmbarkeitskriterium für die Darstellung (8) erfüllt ist, und
- die Höhenverstellung der Darstellung (8), wenn das Wahrnehmbarkeitskriterium nicht erfüllt ist, derart vorgenommen wird, dass die Darstellung (8) aus der vorgegebenen Perspektive einer anderen als der sensierten Fläche des Vorausfahrzeugs überlagert dargestellt wird.

2. Verfahren nach Anspruch 1,
**dadurch gekennzeichnet, dass**
für die Bestimmung der Höhenverstellung und/oder der Drehung der Darstellung (7) der Information (8) ein vorgegebenes durch die Höhenverstellung und/oder die Drehung zu erfüllendes Wahrnehmbarkeitskriterium berücksichtigt und/oder ausgewertet wird.

3. Verfahren nach einem der vorhergehenden Ansprüche,
**dadurch gekennzeichnet, dass**
das Signal in Abhängigkeit von einer mittels der Sensoreinrichtung (3) sensierten Größe und Veränderungsrichtung eines Nick- und/oder Wankwinkels des Kraftfahrzeugs erzeugt wird und die Darstellung (7) der Information (8) in Kompensierung des sensierten Nick- und/oder Wankwinkels höhenverstellt und/oder gedreht dargestellt wird.

4. Verfahren nach einem der vorhergehenden Ansprüche,
**dadurch gekennzeichnet, dass**
durch ein aktives Fahrwerk des Kraftfahrzeugs ein Nick- und/oder Wankwinkel aktiv eingestellt wird, das der Steuereinrichtung (4) bereitgestellte Signal diesem aktiv eingestellten Nick- und/oder Wankwinkel entspricht und die Darstellung der Information entgegengesetzt zu einer Stellrichtung des Nick- und/oder Wankwinkels höhenverstellt und/oder gedreht dargestellt wird.

5. Verfahren nach einem der vorhergehenden Ansprüche,
**dadurch gekennzeichnet, dass**
mittels einer Abtasteinrichtung, insbesondere eines Laserscanners, des Kraftfahrzeugs eine Kontur des Vorausfahrzeugs ermittelt und die Höhenverstellung der Darstellung (7) der Information (8) in Abhängigkeit von der ermittelten Kontur gesteuert wird.)

6. Verfahren nach Anspruch 5,
**dadurch gekennzeichnet, dass**
mittels der Abtasteinrichtung eine Kontur einer Heckscheibe des Vorausfahrzeugs ermittelt und die Darstellung (7) der Information (8) aus der vorgegebene Perspektive der Heckscheibe überlagert dargestellt wird.

7. Verfahren nach einem der vorhergehenden Ansprüche,
**dadurch gekennzeichnet, dass**
eine Augenposition und/oder ein Blickfeld eines Fahrzeuginsassen, insbesondere eines Fahrers, des Kraftfahrzeugs mittels einer Überwachungseinrichtung (12), insbesondere mittels einer Kamera (12), bestimmt und die Höhenverstellung der Darstellung (7) der Information (8) in Abhängigkeit von der Augenposition und/oder dem Blickfeld gesteuert wird.

8. Verfahren nach einem der vorhergehenden Ansprüche,
**dadurch gekennzeichnet, dass**
durch die Steuerung der Drehung der Darstellung (7) der Information (8) diese immer waagerecht bezüglich eines jeweiligen Schwerkraftvektors und/oder eines jeweiligen Untergrundes, auf dem das Kraftfahrzeug sich bewegt oder der sich in einem Blickfeld eines Fahrzeuginsassen vordem Kraftfahrzeug befindet, dargestellt wird.

9. Verfahren nach einem der vorhergehenden Ansprüche,
**dadurch gekennzeichnet, dass**
die Höhenverstellung der Darstellung (7) der Information (8) jeweils in Abhängigkeit von einer von einem Navigationssystem bereitgestellten Streckeninformation, insbesondere einer Steigung oder einem Gefälle eines aktuell von dem Kraftfahrzeug befahrenen Streckenabschnitts, gesteuert wird.

10. Anzeigevorrichtung für ein Kraftfahrzeug, mit einem Head-up-Display (5), einer Sensoreinrichtung (3) und einer Steuereinrichtung (4), mittels welcher eine mittels des Head-up-Displays (5) erzeugte Darstellung (7) einer Information (8) in Abhängigkeit von einem der Steuereinrichtung (4) von der Sensoreinrichtung (3) bereitgestellten Signal veränderbar ist,
**dadurch gekennzeichnet, dass**
die Anzeigevorrichtung dazu eingerichtet ist, ein Verfahren nach einem der vorhergehenden Ansprüche durchzuführen und dazu eine Prozessoreinrichtung und eine Speichereinrichtung mit einem die Verfahrensschritte kodierenden und mittels der Prozessoreinrichtung ausführbaren Programmcode aufweist.

11. Kraftfahrzeug mit einer Anzeigevorrichtung gemäß Anspruch 10.

## Claims

1. Method for controlling a display device for a motor vehicle by means of a control device (4), which display device comprises a head-up display (5), in which, depending on a signal provided to the control device (4) by a sensor device (3), a depiction (7) of a piece of information (8) depicted by means of the head-up display (5) is altered, wherein
- the signal is correlated with a colour and/or a brightness of a projection background (9) and/or is correlated with a relative movement between the projection background (9) and a projection surface (6),
- as an alteration by the control device (4), a height adjustment and/or rotation of the depiction (7) of the piece of information (8), which is determined depending on the signal, is or are autonomously performed,
**characterised in that**
- the signal is generated depending on a colour and/or brightness, detected by means of the sensor device (3), of a surface of a vehicle in front situated in a predetermined distance range in front of the motor vehicle, said surface serving as a projection background (9) which the piece of information (8) is depicted superimposed from a predetermined perspective,
- by means of the control device (4) on the basis of the detected colour and/or brightness of the surface as well as the respective current depiction (7) of the piece of information (8), it is checked whether a predetermined perceptibility criterion for the depiction (8) is met, and
- the height adjustment of the depiction (8), when the perceptibility criterion is not met, is performed in such a way that the depiction (8) is depicted superimposed from the predetermined perspective on a surface different from the detected surface of the vehicle in front.

2. Method according to claim 1,
**characterised in that**
for the determination of the height adjustment and/or the rotation of the depiction (7) of the piece of information (8), a predetermined perceptibility criterion to be met by the height adjustment and/or the rotation is taken into consideration and/or is evaluated.

3. Method according to any of the preceding claims,
**characterised in that**
the signal is generated depending on a magnitude and direction of alteration of a pitch angle and/or roll angle of the motor vehicle detected by means of the sensor device (3), and the depiction (7) of the piece of information (8) is depicted adjusted in height and/or rotated in order to compensate for the detected pitch and/or roll angle.

4. Method according to any of the preceding claims,
**characterised in that**
by means of an active chassis of the motor vehicle, a pitch angle and/or roll angle is or are actively adjusted, the actively adjusted pitch and/or roll angle corresponding to the signal provided to the control device (4), and the depiction of the piece of information is depicted adjusted in height and/or rotated opposite to a direction of adjustment of the pitch and/or roll angle.

5. Method according to any of the preceding claims,
**characterised in that**
by means of a scanning device, in particular a laser scanner, of the motor vehicle, a contour of the vehicle in front is determined, and the height adjustment of the depiction (7) of the piece of information (8) is controlled depending on the determined contour.

6. Method according to claim 5,
**characterised in that**
by means of the scanning device, a contour of a rear window of the vehicle in front is determined, and the depiction (7) of the piece of information (8) is depicted superimposed on the rear window from the predetermined perspective.

7. Method according to any of the preceding claims,
**characterised in that**
an eye position and/or a field of view of a vehicle occupant, in particular a driver, of the motor vehicle is determined by means of a monitoring device (12), in particular by means of a camera (12), and the height adjustment of the depiction (7) of the piece of information (8) is controlled depending on the eye position and/or the field of view.

8. Method according to any of the preceding claims,
**characterised in that**
through the control of the rotation of the depiction (7) of the piece of information (8), said piece of information is always depicted horizontally with respect to a respective gravity vector and/or with respect to a respective subsurface, on which the motor vehicle is moving or which is situated in front of the motor vehicle in a field of view of a vehicle occupant.

9. Method according to any of the preceding claims,
**characterised in that**
the height adjustment of the depiction (7) of the piece of information (8) is controlled in each case depending on a piece of path information provided by a navigation system, in particular an upward slope or a downward slope of a path segment currently travelled by the motor vehicle.

10. Display device for a motor vehicle, having a head-up display (5), a sensor device (3), and a control device (4), by means of which a depiction (7) of a piece of information (8), produced by means of the head-up display (5), can be altered depending on a signal provided to the control device (3) by the sensor device (4),
**characterised in that**
the display device is configured to carry out a method according to any of the preceding claims and, to this end, has a processor device and a memory storage device having a program code that codes the method steps and can be executed by means of the processor device.

11. Motor vehicle having a display device according to claim 10.

## Revendications

1. Procédé de commande d'un dispositif d'affichage comprenant un affichage tête haute (5) pour un véhicule automobile au moyen d'un dispositif de commande (4), dans lequel une représentation (7) d'une information (8) représentée au moyen de l'affichage tête haute (5) est modifiée en fonction d'un signal mis à disposition du dispositif de commande (4) par un dispositif de capteur (3), dans lequel
- le signal se corrèle avec une couleur et/ou une luminosité d'un arrière-plan de projection (9) et/ou avec un mouvement relatif entre l'arrière-plan de projection (9) et une surface de projection (6), et
- un réglage en hauteur et/ou une rotation de la représentation (7) de l'information (8) déterminés en fonction du signal est effectué automatiquement en tant que modification par le dispositif de commande (4),
**caractérisé en ce que**
- le signal est généré en fonction d'une couleur et/ou luminosité détectée au moyen du dispositif de capteur (3) d'une surface servant d'arrière-plan de projection (9) d'un véhicule circulant devant se trouvant dans une plage de distance prédéterminée devant le véhicule automobile, qui représente de manière superposée l'information (8) d'une perspective prédéfinie,
- il est vérifié au moyen du dispositif de commande (4) à l'aide de la couleur et/ou luminosité détectée de la surface ainsi que de la représentation (7) respectivement actuelle de l'information (8) si un critère de perceptibilité prédéfini est rempli pour la représentation (8), et
- le réglage en hauteur de la représentation (8), lorsque le critère de perceptibilité n'est pas rempli est effectué de sorte que la représentation (8) est représentée de manière superposée de la perspective prédéfinie d'une autre surface que la surface détectée du véhicule circulant devant.

2. Procédé selon la revendication 1,
**caractérisé en ce que**
un critère de perceptibilité prédéfini à remplir par le réglage en hauteur et/ou la rotation est pris en compte et/ou évalué pour la détermination du réglage en hauteur et/ou de la rotation de la représentation (7) de l'information (8).

3. Procédé selon l'une quelconque des revendications précédentes,
**caractérisé en ce que**
le signal est généré en fonction d'une grandeur et direction de modification détectée au moyen du dispositif de capteur (3) d'un angle de tangage et/ou de roulis du véhicule automobile et la représentation (7) de l'information (8) est représentée réglée en hauteur et/ou tournée en compensation de l'angle de tangage et/ou de roulis détecté.

4. Procédé selon l'une quelconque des revendications précédentes,
**caractérisé en ce que**
un angle de tangage et/ou de roulis est réglé activement par un train de roulement actif du véhicule automobile, le signal mis à disposition du dispositif de commande (4) correspond à cet angle de tangage et/ou de roulis réglé activement et la représentation de l'information est représentée réglée en hauteur et/ou tournée de manière opposée à une direction de réglage de l'angle de tangage et/ou de roulis.

5. Procédé selon l'une quelconque des revendications précédentes,
**caractérisé en ce que**
un contour du véhicule circulant devant est déterminé au moyen d'un dispositif de balayage, en particulier d'un scanner laser, du véhicule automobile et le réglage en hauteur de la représentation (7) de l'information (8) est commandé en fonction du contour déterminé.

6. Procédé selon la revendication 5,
**caractérisé en ce que**
un contour d'une lunette arrière du véhicule circulant devant est déterminé au moyen du dispositif de balayage et la représentation (7) de l'information (8) est représentée de manière superposée d'une perspective prédéfinie de la lunette arrière.

7. Procédé selon l'une quelconque des revendications précédentes,
**caractérisé en ce que**
une position des yeux et/ou un champ de vision d'un passager de véhicule, en particulier d'un conducteur, du véhicule automobile est déterminé au moyen d'un dispositif de surveillance (12), en particulier au moyen d'une caméra (12) et le réglage en hauteur de la représentation (7) de l'information (8) est commandé en fonction de la position des yeux et/ou du champ de vision.

8. Procédé selon l'une quelconque des revendications précédentes,
**caractérisé en ce que**
par la commande de la rotation de la représentation (7) de l'information (8), celle-ci est représentée toujours horizontalement par rapport à un vecteur de gravité respectif et/ou à un sol respectif, sur lequel le véhicule automobile se déplace ou qui se trouve dans un champ de vision d'un passager de véhicule devant le véhicule automobile.

9. Procédé selon l'une quelconque des revendications précédentes,
**caractérisé en ce que**
le réglage en hauteur de la représentation (7) de l'information (8) est commandé respectivement en fonction d'une information de trajet mise à disposition par un système de navigation, en particulier d'une pente ou d'une déclivité d'une section de trajet parcourue actuellement par le véhicule automobile.

10. Dispositif d'affichage pour un véhicule automobile, avec un affichage tête haute (5), un dispositif de capteur (3) et un dispositif de commande (4), au moyen duquel une représentation (7) d'une information (8) générée au moyen de l'affichage tête haute (5) est modifiable en fonction d'un signal mis à disposition du dispositif de commande (4) par le dispositif de capteur (3),
**caractérisé en ce que**
le dispositif d'affichage est aménagé pour réaliser un procédé selon l'une quelconque des revendications précédentes et présente pour ce faire un dispositif de processeur et un dispositif d'enregistrement avec un code de programme codant les étapes de procédé et pouvant être exécuté au moyen du dispositif de processeur.

11. Véhicule automobile avec un dispositif d'affichage selon la revendication 10.
